# EUROPÄISCHE PATENTSCHRIFT

(11) **EP 2 569 179 B1**
(45) Veröffentlichungstag und Bekanntmachung des Hinweises auf die Patenterteilung: **29.01.2014**
(21) Anmeldenummer: 11709640.4
(22) Anmeldetag: 14.03.2011
(51) Int. Cl.: B60K 20/04, F16H 59/02

(54) **BEFESTIGUNGSVORRICHTUNG AM UNTERBODEN EINES KRAFTFAHRZEUGES**
FASTENING DEVICE ON THE UNDERBODY OF A MOTOR VEHICLE
DISPOSITIF DE FIXATION SUR LE DESSOUS DE CAISSE D'UN VÉHICULE

(30) Priorität: 08.05.2010 DE 102010019928
(43) Veröffentlichungstag der Anmeldung: 20.03.2013
(73) Patentinhaber: Volkswagen Aktiengesellschaft, 38436 Wolfsburg (DE)
(72) Erfinder: KESSLER, Jörn, 27607 Langen (DE); REMMERT, Martin, 38551 Ribbesbüttel (DE)
(86) Internationale Anmeldenummer: PCT/EP2011/001240
(87) Internationale Veröffentlichungsnummer: WO 2011/141083

(56) Entgegenhaltungen:
- DE-U1- 29 603 542
- US-A- 4 018 099
- US-A- 4 237 998
- US-A- 5 357 823
- US-A- 5 749 261

## Beschreibung

Die vorliegende Erfindung betrifft eine Befestigungsvorrichtung am Unterboden eines Kraftfahrzeuges, gemäß dem Oberbegriff des Patentanspruches 1.

Bei sogenannten Knüppelschaltungen in Kraftfahrzeugen, insbesondere Personenkraftfahrzeugen, ist eine den nach oben abragenden Schalthebel lagernde Schaltvorrichtung vorgesehen, die durch den Unterboden oder einen Mitteltunnel durchdringende Betätigungselemente mit dem Geschwindigkeits-Wechselgetriebe des Kraftfahrzeuges verbunden ist.

In einer gattungsgemäßen Befestigungsvorrichtung ist die Schaltvorrichtung als solches durch eine Mittelkonsole überdeckt, wobei sich der Schaltknüppel durch eine Manschette hindurch in das Fahrzeuginnere erstreckt. Es ist auch aus der DE 296 03 542 U1 bereits bekannt, zu einer verbesserten Geräuschdämmung zum Fahrzeuginneren hin zusätzlich über der Schaltvorrichtung eine Dämpfungskappe anzuordnen.

Am Unterboden der Fahrzeugkarosserie werden im Rohbauzustand Anbauteile verschraubt. So wird das Schaltgehäuse der Schaltvorrichtung von unten in den im Unterboden gebildeten Mitteltunnel eingefahren und dort verschraubt. Außerdem können Halteelemente oder -winkel der Mittelkonsole sowie die oben erwähnte Dämpfungskappe am Unterboden verschraubt sein. Die Montage dieser Anbauteile ist mit hohem fertigungstechnischen sowie Bauteilaufwand verbunden.

Aufgabe der Erfindung ist es, eine Befestigungsvorrichtung der gattungsgemäßen Art vorzuschlagen, die flexibel einsetzbar und fertigungstechnisch günstig herstellbar ist und die eine besonders einfache, schnelle Montage ermöglicht.

Die Lösung dieser Aufgabe gelingt mit den Merkmalen des Patentanspruches 1. Vorteilhafte und besonders zweckmäßige Weiterbildungen der Erfindung beschreiben die Unteransprüche.

Gemäß dem kennzeichnenden Teil des Patentanspruches 1 wird zum Schallschutz eine die Schaltvorrichtung überdeckende, einen Durchtritt für den Schaltknüppel aufweisende Dämpfungskappe vorgesehen. Das Halteelement für die Mittelkonsole ist hierbei unter Zwischenlage der Dämpfungskappe am Unterboden des Kraftfahrzeuges befestigbar. Erfindungsgemäß erfolgt die Befestigung des Halteelementes für die Mittelkonsole daher nicht mehr unmittelbar auf dem Unterboden, sondern mittelbar über die Dämpfungskappe. Die Dämpfungskappe stellt somit Verankerungspunkte für zumindest die Halteelemente bzw. Haltewinkel der Mittelkonsole bereit. Auf diese Weise können zusätzliche Befestigungspunkte unmittelbar am Unterboden weggelassen werden, wodurch montagetechnisch aufwändige Schweißbolzen oder dergleichen als Verankerungspunkte nicht mehr am Unterboden vorzusehen sind.

Die Dämpfungskappe kann zur Ausführung der Erfindung zumindest Aufnahmen für die Halteelemente bzw. Haltewinkel zur Befestigung der Mittelkonsole aufweisen. Diese können zusammen mit der Schaltvorrichtung mit dem Unterboden oder Mitteltunnel verschraubt sein. Damit bildet die Dämpfungskappe quasi ein Bindeglied zwischen der Schaltvorrichtung einerseits und den Halteelementen bzw. Haltewinkelnfür die Befestigung der Mittelkonsole andererseits, wobei die gemeinsame Befestigung von Schaltvorrichtung und Dämpfungskappe besonders montagegünstig ist. Ferner können zusätzliche Befestigungsmittel der Halteelemente bzw. Haltewinkel am Unterboden oder einem dort ausgebildeten Mitteltunnel entfallen.

Die in etwa haubenförmig gestaltete Dämpfungskappe kann einen zumindest teilweise umlaufenden Befestigungsflansch aufweisen. Der Befestigungsflansch kann bevorzugt die in Einbaulage nach unten offene Haubenöffnung der Dämpfungskappe umziehen. Außerdem können am Befestigungsflansch die zusätzlichen Halterungen für die Halteelemente und/oder für weitere Anbauteile ausgebildet werden.

Besonders bevorzugt können die Aufnahmen für die Halteelemente als Steckverbindungen mit zusätzlich einer Clipsverbindung und/oder einer Schraubverbindung ausgebildet sein. Neben der dadurch ermöglichten schnellen Montage der Halteelemente können bei Verwendung einer einheitlichen Dämpfungskappe je nach Fahrzeugtyp unterschiedliche Halteelemente für unterschiedlich ausgeführte Mittelkonsolen verbaut werden, wobei die Steckverbindungsabschnitte jeweils baugleich ausgebildet sind.

Die Aufnahmen für die Halteelemente bzw. Haltewinkel können bevorzugt an den in Fahrzeuglängsrichtung liegenden Stirnseiten und/oder an benachbarten Flanschbereichen der Dämpfungskappe vorgesehen sein und somit einen vorderen und einen hinteren Befestigungspunkt für die Mittelkonsole bilden.

Fertigungstechnisch besonders günstig kann dabei zumindest eine der Steckverbindungen als Teleskopführung mit einer rohrförmigen Aufnahme einerseits und einem damit zusammenwirkenden Schiebeteil andererseits ausgeführt sein.

Alternativ oder zusätzlich dazu kann zumindest eine der Steckverbindungen mit einer T-förmigen Aufnahme und einem die Aufnahme U-förmig übergreifenden Schiebeteil ausgeführt sein.

In vorteilhafter Weiterbildung der Erfindung können zusätzlich zu den Haltewinkel-Aufnahmen, zu den Steckverbindungen an den Seitenwänden und/oder an seitlichen Flanschbereichen der Dämpfungskappe weitere Halterungen, zum Beispiel Haltelappen, vorgesehen sein, an denen Seitenwände der Mittelkonsole mittels Schraubverbindungen befestigbar sind. Damit wird eine stabile Befestigung der Mittelkonsole mit einer gleichmäßigen Abstützung über die Dämpfungskappe in den Unterboden sichergestellt.

Des Weiteren können an den Wänden der Dämpfungskappe und/oder der Haltelappen zusätzlich Befestigungseinrichtungen zum Befestigen von elektrischen Leitungen und/oder von Luftführungselementen innerhalb der Mittelkonsole vorgesehen sein. Die Befestigungseinrichtungen können zum Beispiel Bohrungen oder angeformte Zapfen zum Herstellen aufsteckbarer Clipsverbindungen sein.

Zur Erzielung einer definierten, montageeinfachen Zuordnung der Dämpfungskappe relativ zum Unterboden oder dem Mitteltunnel können an dem Befestigungsflansch der Dämpfungskappe nach unten abragende Zentrierstifte angeordnet sein, die in korrespondierende Ausnehmungen des Unterbodens oder Mitteltunnels hineinragen.

Des Weiteren kann in den Durchbruch für den Schaltknüppel in der Deckwand der Dämpfungskappe eine gummielastische, die Schaltbewegungen des Schaltknüppels ausgleichende und diesen umschließende Manschette eingesetzt sein, so dass auch in diesem Bereich zusammen mit der Manschette in der Mittelkonsole eine doppelwandige Geräuschdämmung gegeben ist.

Fertigungstechnisch besonders günstig kann die Dämpfungskappe mit den angeformten Aufnahmen für die Haltewinkel und gegebenenfalls den Haltelappen und gegebenenfalls den Zentrierstiften einstückig aus plastischem Kunststoff hergestellt sein. Gleiches gilt für die Haltewinkel zur Befestigung der Mittelkonsole, die ebenfalls aus plastischem Kunststoff hergestellt sein können.

Zur Erzielung zuverlässiger, ausreichend belastbarer Schraubverbindungen zwischen der Dämpfungskappe und den Haltewinkeln für die Mittelkonsole und/oder der Schraubverbindungen zwischen den Haltewinkeln und der Mittelkonsole und/oder der Schraubverbindungen zwischen der Mittelkonsole und den Haltelappen der Dämpfungskappe wird ferner vorgeschlagen, dass Blecheinsatzteile oder Schnappmuttern aus Metall verwendet sind, die über Wandbereiche der Bauteile aufgeschoben und verrastet sind und in die korrespondierende, Bohrungen in den Wandbereichen durchdringende Blechschrauben eingeschraubt sind.

Schließlich kann in bevorzugter Weiterbildung der Erfindung die Mittelkonsole zweiteilig mit einem die Dämpfungskappe umschließenden und seitliche Wandbereiche aufweisenden Unterteil und einem das Unterteil nach oben abschließenden Deckteil ausgeführt sein, wobei das Unterteil über die Haltewinkel mit der Dämpfungskappe bzw. dem Mitteltunnel fest verbunden ist und das Deckteil die entsprechenden Schraubverbindungen überdeckt. Dies ermöglicht u.a. eine gute Zugänglichkeit bei der Montage gegebenenfalls von Luftführungen und elektrischen Leitungen oder Kabelsträngen innerhalb der Mittelkonsole mit einer ästhetisch ansprechenden Abdeckung der gesamten Baueinheit mittels des Deckteils.

Zwei Ausführungsbeispiele der Erfindung sind im Folgenden mit weiteren Einzelheiten näher erläutert. Die anliegende, schematische Zeichnung zeigt in:
- Fig. 1: eine Ansicht schräg von oben auf eine in einen Mitteltunnel eines Unterbodens eines Personenkraftfahrzeuges eingesetzte Schaltvorrichtung mit einem nach oben abragenden Schaltknüppel;
- Fig. 2: in raumbildlicher Ansicht die auf die Schaltvorrichtung bzw. auf den Mitteltunnel aufsetzbare Dämpfungskappe mit einer gummielastischen Manschette für den Durchtritt des Schaltknüppels der Schaltvorrichtung und mit einem vorderen und einem hinteren Haltewinkel für eine Mittelkonsole;
- Fig. 3: die Dämpfungskappe gemäß Fig. 2 in einer Seitenansicht, mit angeformten Haltelappen und nach unten abragenden Zentrierstiften;
- Fig. 4: eine modifizierte Variante der Dämpfungskappe gemäß den Fig. 2 und 3, mit einer T-förmigen Steckverbindung für den hinteren Haltewinkel; und
- Fig. 5: eine Draufsicht auf die Dämpfungskappe gemäß Fig. 4 mit einer Schnittdarstellung der hinteren Steckverbindung.

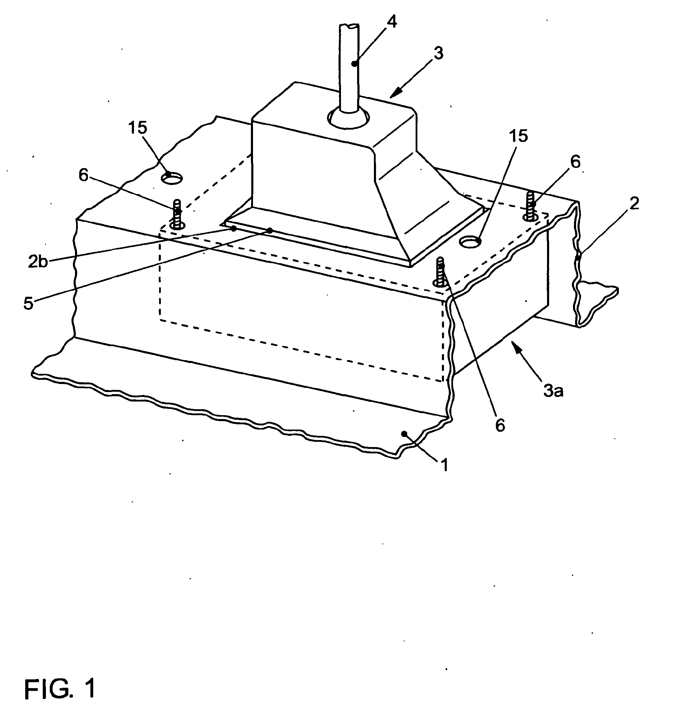

Die Fig. 1 zeigt teilweise einen Unterboden 1 der Karosserie eines Personenkraftfahrzeuges mit einem eingeformten Mitteltunnel 2, in den von unten ein hier nur kastenförmig angeordnetes Schaltgehäuse 3a einer Schaltvorrichtung 3 in eine entsprechende, etwa rechteckförmige Ausnehmung 2b eingesetzt ist.

Die dem üblichen Stand der Technik entsprechende Schaltvorrichtung 3 ist Teil einer Knüppelschaltung des Kraftfahrzeuges und in nicht dargestellter Weise über Betätigungselemente (Gestänge, Seilzüge, etc.) mit einem nicht dargestellten Geschwindigkeits-Wechselgetriebe verbunden, das über den gelenkig gelagerten, nach oben in den Fahrzeuginnenraum ragenden Schaltknüppel 4 (oder Schalthebel bzw. Wählhebel) entsprechend geschaltet werden kann.

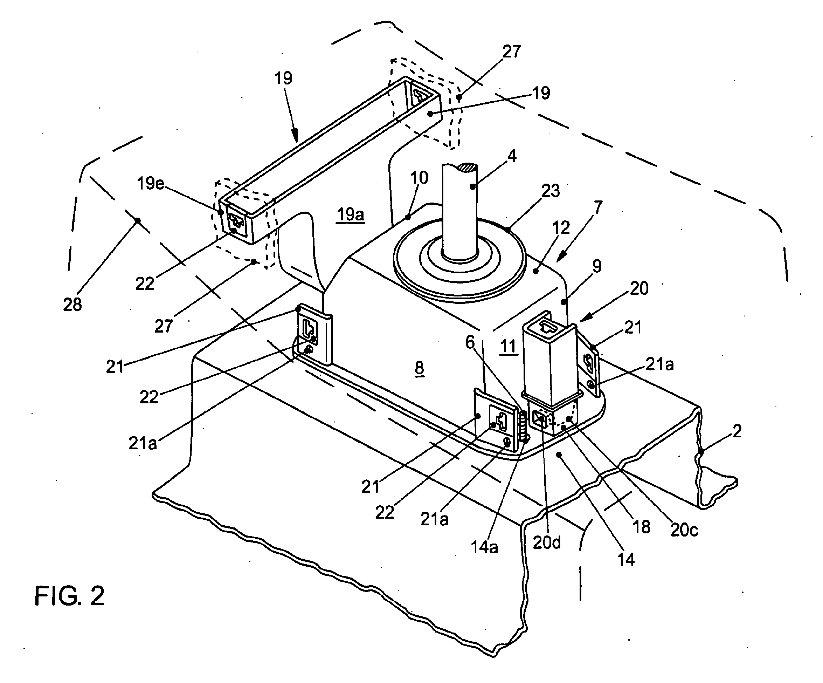

An einer oberen Basisplatte 5 des Schaltgehäuses 3a der Schaltvorrichtung 3 sind vier Schraubenbolzen 6 angeordnet, die durch Bohrungen (ohne Bezugszeichen) im Mitteltunnel 2 nach oben abragen und über die zugleich eine die Schaltvorrichtung 3 abdeckende Dämpfungskappe 7 befestigbar ist, wie sie in den Fig. 2 bis 4 gezeigt ist.

In der Fig. 2 ist die Dämpfungskappe 7 in der Einbaulage dargestellt. An der Dämpfungskappe 7 sind Haltewinkel 19, 20 befestigt, an denen ein Unterteil 27 einer Mittelkonsole 28 befestigt ist. Aus Gründen der Übersichtlichkeit ist von der Mittelkonsole 28 lediglich die Konturlinie gestrichelt angedeutet. Vom Unterteil 27 der Mittelkonsole 28 sind lediglich die vorderen Anbindungsstellen zur Festlegung am vorderen Haltewinkel 19 gezeigt.

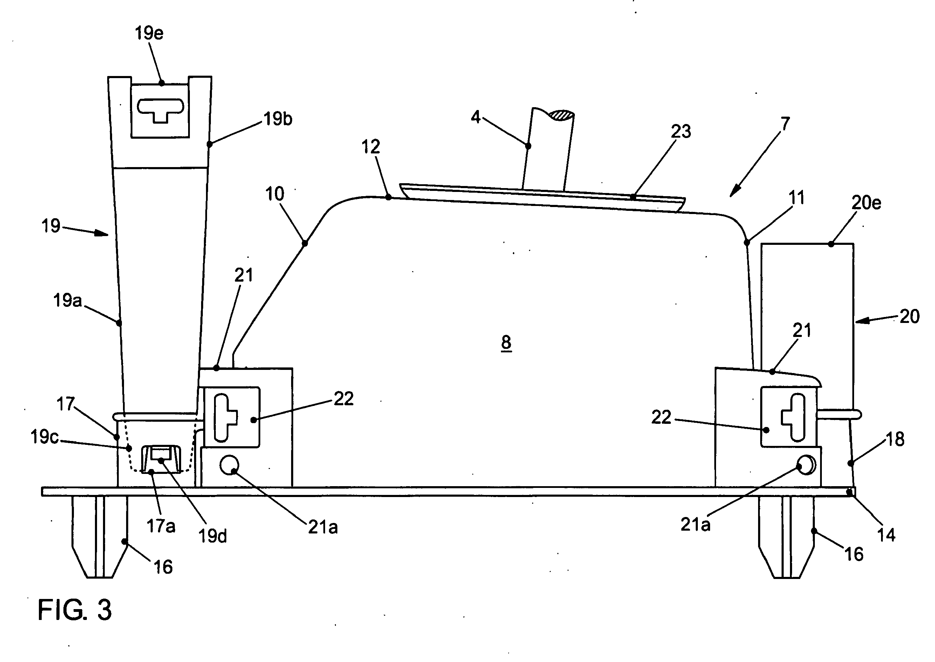

Die Dämpfungskappe 7 (Fig. 2 und 3) setzt sich im Wesentlichen aus zwei Seitenwänden 8,9, zwei Stirnwänden 10, 11 und einer Deckwand 12 zusammen und ist einstückig aus einem plastischen Kunststoff mit einer definierten Wandstärke hergestellt.

An die Stirnwände 10, 12 sind nach vorne und nach hinten abragende Befestigungsflansche 13, 14 angeformt, in die mit der Anordnung der Schraubenbolzen 6 übereinstimmende Bohrungen 13a, 14a (nur teilweise ersichtlich) eingearbeitet sind. Zur Befestigung der Dämpfungskappe 7 am Mitteltunnel 2 wird diese bei von unten eingesetzter Schaltvorrichtung 3 auf deren Schraubenbolzen 6 aufgesetzt und mittels nicht dargestellter Schraubenmuttern befestigt.

Zur Herstellung einer konstruktiv definierten Position der Dämpfungskappe 7 relativ zum Mitteltunnel 2 sind in dem Mitteltunnel 2 jeweils etwa zwischen den vorderen und hinteren Schraubenbolzen 6 Bohrungen 15 (Fig. 1) vorgesehen, in die bei der Montage der Dämpfungskappe 7 an die Befestigungsflansche 13, 14 angeformte, nach unten abragende Zentrierstifte 16 (Fig. 3) einfahren können.

An die Befestigungsflansche 13, 14 der Dämpfungskappe 7 sind rohrförmige, nach oben offene Aufnahmen 17, 18 angeformt, die als teleskopische Steckverbindungen für an der Dämpfungskappe 7 zu befestigende, ebenfalls aus plastischem Kunststoff hergestellte Haltewinkel 19, 20 dienen.

Der vordere Haltewinkel 19 weist gemäß der Fig. 2 einen etwa vertikalen Abschnitt 19a und einen oberen Querarm 19b auf, die als Hohlprofilteile ausgeführt sind. Der vertikale Abschnitt 19a endet gemäß der Fig. 3 nach unten in einem an die Vierkantform der Aufnahme 17 angepassten Schiebeteil 19c. In das Schiebeteil 19c sind gegenüberliegend zwei Rasthaken 19d eingeformt, die als Clipsverbindung wirkend beim Einschieben des Haltewinkels 19 in die Aufnahme 17 in korrespondierende Ausnehmungen 17a der Aufnahme 17 einrasten.

Der als etwa geradliniges, hohles Profilteil ausgebildete hintere Haltewinkel 20 ist ebenfalls über ein nach unten angeformtes Schiebeteil 20c in die rohrförmige Aufnahme 18 eingesetzt und wie vorbeschrieben über eine Clipsverbindung mit angeformten Rasthaken 20d gehalten, die wiederum in Ausnehmungen 18a der rohrförmigen Aufnahme 18 gehalten sind.

An die Seitenwände 8, 9 der Dämpfungskappe 7 und an die Befestigungsflansche 13, 14 sind beiderseits nach vorne und nach hinten abragende Haltelappen (einheitlich mit 21 bezeichnet) angeformt, die im Ausführungsbeispiel gemäß den Fig. 2 und 3 zur zusätzlichen Befestigung der Mittelkonsole (hier nicht dargestellt) dienen.

Auf die Haltelappen 21 sowie an vertikal und horizontal ausgerichteten Wandabschnitten 19e, 20e der Haltewinkel 19, 20 sind Blecheinsatzteile bzw. Schnappmuttern 22 (der besseren Übersichtlichkeit nur teilweise eingezeichnet) aufgeschoben und verrastet, mittels denen in Verbindung mit einzuschraubenden Blechschrauben feste Verbindungen mit der Mittelkonsole oder Einbauten, wie Luftführungskanäle, etc. herstellbar sind. Wie ersichtlich ist, ist dabei die Ausrichtung der Blechschrauben bei dem hinteren Haltewinkel 20 vertikal, während die beiden anderen Schraubverbindungen horizontal verlaufen.

Ferner sind die Haltelappen 21 mit zusätzlichen Befestigungseinrichtungen in Form von eingebrachten Bohrungen 21 a versehen, an denen die Mittelkonsole 28 oder die bei der Montage von Einbauten des Kraftfahrzeuges innerhalb der Mittelkonsole zum Beispiel Luftführungen, elektrische Kabelstränge, etc. festlegbar sind, zum Beispiel durch Clipsverbindungen. Anstelle der Bohrungen 21 a können auch Haltestifte oder dergl. verwendet sein.

In der Deckwand 12 der Dämpfungskappe 7 ist eine kreissymmetrische Ausnehmung (ohne Bezugszeichen) vorgesehen, in die eine gummielastische Manschette 23 eingeknöpft ist und durch die hindurch der Schaltknüppel 4 aus der Dämpfungskappe 7 herausgeführt ist. Die Manschette 23 umschließt dicht den Schaltknüppel 4 und gleicht die auftretenden Schaltbewegungen entsprechend aus.

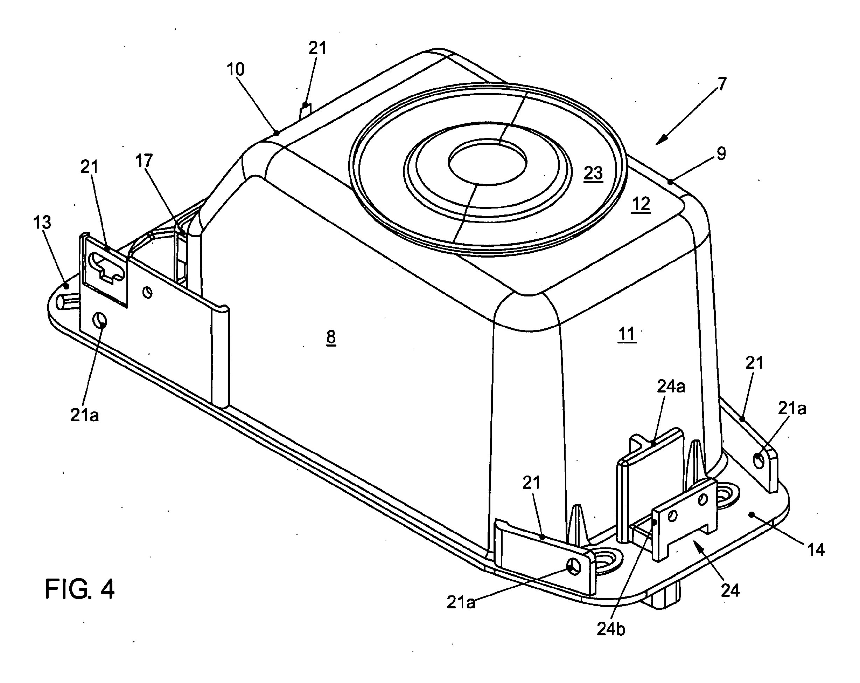

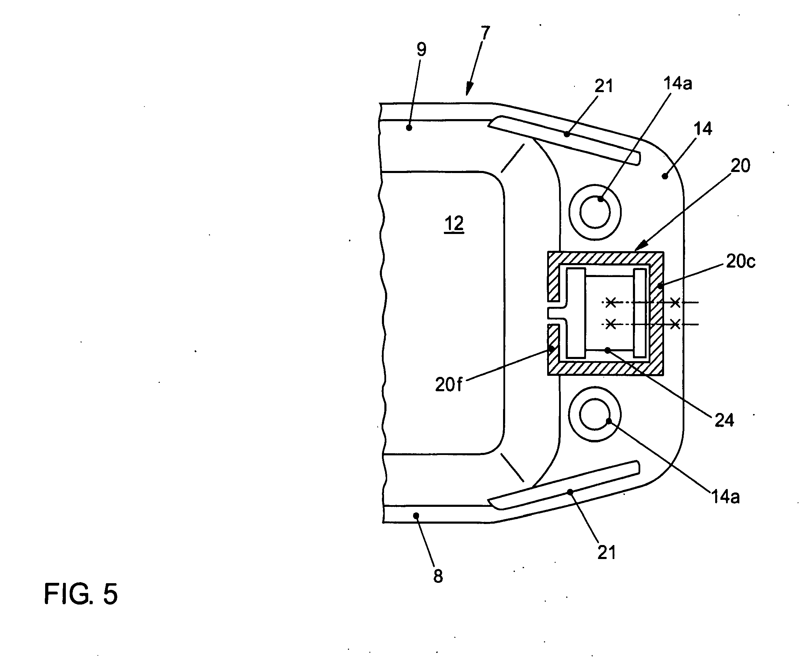

Die Fig. 4 und 5 zeigen eine modifizierte Aufnahme 24 für den hinteren Haltewinkel 20 der Dämpfungskappe 7. Funktionell gleiche Teile sind mit gleichen Bezugszeichen versehen.

Die Aufnahme 24 weist eine nach oben abragende, T-förmige Wand 24a (Fig. 4) und einen parallel dazu ausgerichteten Wandteil 24b auf, auf die als Steckverbindung (Fig. 5) das eine vertikale Längsnut 20f aufweisende Schiebeteil 20c des Haltewinkels 20 aufgesteckt ist. Das Schiebeteil 20c ist durch eine nicht weiter dargestellte Schraubverbindung mit der Aufnahme 24 fest verbunden. Die Schraubverbindung (nicht dargestellt) kann durch auf das Wandteil 24b aufgesteckte Schnappmuttern 22 und sich durch das Schiebeteil 20c erstreckende Blechschrauben bewerkstelligt sein.

### Bezugszeichenliste

| | | | |
|---|---|---|---|
| 1 | Unterboden | 22 | Schnappmutter |
| 2 | Mitteltunnel | 23 | Manschette |
| 2b | Ausnehmung | 24 | hintere Aufnahme für Halteteil |
| 3 | Schaltvorrichtung | 24a | T-förmige Wand |
| 3a | Schaltgehäuse | 24b | Wandabschnitt |
| 4 | Schaltknüppel | 25 | Seitenwände |
| 5 | Basisplatte | 27 | Unterteil der Mittelkonsole |
| 6 | Schraubenbolzen | 28 | Mittelkonsole |
| 7 | Dämpfungskappe | | |
| 8, 9 | Seitenwände | | |
| 10, 11 | Stirnwände | | |
| 12 | Deckwand | | |
| 13 | vorderer Befestigungsflansch | | |
| 13a | Bohrungen | | |
| 14 | hinterer Befestigungsflansch | | |
| 14a | Bohrungen | | |
| 15 | Zentrierbohrungen Mitteltunnel | | |
| 16 | Zentrierstifte Dämpfungskappe | | |
| 17 | Aufnahme vorderer Haltewinkel | | |
| 17a | Ausnehmung | | |
| 18 | hintere Aufnahme für Haltewinkel | | |
| 18a | Ausnehmung | | |
| 19 | vorderer Haltewinkel | | |
| 19a | vertikaler Abschnitt | | |
| 19b | Querarm | | |
| 19c | Schiebeteil | | |
| 19d | Rasthaken | | |
| 19e | Wandabschnitt | | |
| 20 | hinterer Haltewinkel | | |
| 20c | Schiebeteil | | |
| 20d | Rasthaken | | |
| 20e | Wandabschnitt | | |
| 20f | Längsnut | | |
| 21 | Haltelappen | | |
| 21a | Bohrung | | |

## Patentansprüche

1. Befestigungsvorrichtung am Unterboden (1) eines Kraftfahrzeugs, mittels der eine Schaltvorrichtung (3) am Unterboden (1) befestigbar ist, wobei die Schaltvorrichtung (3) einen in den Fahrzeuginnenraum ragenden Schaltknüppel (4) aufweist und von einer Mittelkonsole (28) überdeckt ist, die über zumindest ein Halteelement (19, 20) mit dem Unterboden (1) fest verbindbar ist, **dadurch gekennzeichnet, dass** eine die Schaltvorrichtung (3) überdeckende, einen Durchtritt für den Schaltknüppel (4) aufweisende Dämpfungskappe (7) vorgesehen ist, und dass das Halteelement (19, 20) unter Zwischenlage der Dämpfungskappe (7) am Unterboden (1) befestigbar ist.

2. Befestigungsvorrichtung nach Anspruch 1, **dadurch gekennzeichnet, dass** die Dämpfungskappe (7) zumindest eine Aufnahme (17, 18; 24) für das Halteelement (19, 20) der Mittelkonsole (28) aufweist.

3. Befestigungsvorrichtung nach Anspruch 1 oder 2, **dadurch gekennzeichnet, dass** ein Schaltgehäuse (3a) der Schaltvorrichtung (3) mit der Unterseite des Unterbodens (1) verschraubt ist, wobei insbesondere das Schaltgehäuse (3a) zusammen mit der an der Oberseite des Unterbodens (1) angeordneten Dämpfungskappe (7) an identischen Befestigungsstellen (6) befestigt sind.

4. Befestigungsvorrichtung nach Anspruch 1, 2 oder 3, **dadurch gekennzeichnet, dass** die Aufnahme (17, 18; 24) für das Halteelement (19, 20) als Steckverbindung mit zusätzlich einer Clipsverbindung (19d, 20d) und/oder Schraubverbindung (bei 24b) ausgebildet ist.

5. Befestigungsvorrichtung nach einem der Ansprüche 2, 3 oder 4, **dadurch gekennzeichnet, dass** die Aufnahme (17, 18; 24) für das Halteelement (19, 20) an den in Fahrzeuglängsrichtung liegenden Stirnseiten (10, 11) und/oder an dazu benachbarten Befestigungsflanschen (13, 14) der Dämpfungskappe (7) vorgesehen ist.

6. Befestigungsvorrichtung nach einem der Ansprüche 4 oder 5, **dadurch gekennzeichnet, dass** die Steckverbindung als Teleskopführung mit einer rohrförmigen Aufnahme (17, 18) und einem damit zusammenwirkenden Schiebeteil (19c, 20c) ausgeführt ist.

7. Befestigungsvorrichtung nach einem der Ansprüche 4 oder 5, **dadurch gekennzeichnet, dass** die Steckverbindung mit einer T-förmigen Aufnahme (24) und einem dessen Wandabschnitte (24a, 24b) U-förmig übergreifenden Schiebeteil (20c) ausgeführt ist.

8. Befestigungsvorrichtung nach einem der Ansprüche 2 bis 7, **dadurch gekennzeichnet, dass** die Dämpfungskappe (7) zusätzlich zu der Aufnahme (17, 18; 24) Halterungen (21) aufweist, an denen die Mittelkonsole (28) mittels Schraubverbindungen befestigbar sind.

9. Befestigungsvorrichtung nach einem der vorhergehenden Ansprüche, **dadurch gekennzeichnet, dass** an der Dämpfungskappe (7) zusätzlich Befestigungseinrichtungen (21 a) zum Befestigen von innerhalb der Mittelkonsole (28) verlegten elektrischen Leitungen und/oder von Luftführungselementen vorgesehen sind.

10. Befestigungsvorrichtung nach einem der vorhergehenden Ansprüche, **dadurch gekennzeichnet, dass** die Dämpfungskappe (7) einen zumindest teilweise umlaufenden Befestigungsflansch (13, 14) aufweist, an dem die Aufnahme (17, 18; 24) und/oder nach unten abragende Zentrierstifte (16) angeordnet sind, die in korrespondierende Ausnehmungen (15) des Mitteltunnels (2) einragen.

## Claims

1. Fastening device on the underbody (1) of a motor vehicle by means of which a shifting device (3) may be fastened to the underbody (1), wherein the shifting device (3) comprises a shift lever (4) protruding into the vehicle interior and is covered by a central console (28), which may be fixedly connected to the underbody (1) via at least one retaining element (19, 20), **characterized in that** a damping cap (7) is provided, said damping cap covering the shifting device (3) and comprising a through-passage for the shift lever (4) and **in that** the retaining element (19, 20) is able to be fastened to the underbody (1) by the interposition of the damping cap (7).

2. Fastening device according to Claim 1, **characterized in that** the damping cap (7) comprises at least one receiver (17, 18; 24) for the retaining element (19, 20) of the central console (28).

3. Fastening device according to Claim 1 or 2, **characterized in that** a shift housing (3a) of the shifting device (3) is screwed to the underside of the underbody (1), wherein in particular the shift housing (3a) together with the damping cap (7) arranged on the upper face of the underbody (1) are fastened at identical fastening points (6).

4. Fastening device according to Claim 1, 2 or 3, **characterized in that** the receiver (17, 18; 24) for the retaining element (19, 20) is configured as a plug-in connection, additionally with a clip connection (19d, 20d) and/or screw connection (at 24b).

5. Fastening device according to one of Claims 2, 3 or 4, **characterized in that** the receiver (17, 18; 24) for the retaining element (19, 20) is provided on the front faces (10, 11) located in the longitudinal direction of the vehicle and/or on fastening flanges (13, 14) of the damping cap (7) adjacent to said front faces.

6. Fastening device according to one of Claims 4 or 5, **characterized in that** the plug-in connection is designed as a telescopic guide with a tubular receiver (17, 18) and a slide part (19c, 20c) cooperating therewith.

7. Fastening device according to one of Claims 4 or 5, **characterized in that** the plug-in connection is designed with a T-shaped receiver (24) and a slide part (20c) encompassing the wall portions (24a, 24b) thereof in a U-shaped manner.

8. Fastening device according to one of Claims 2 to 7, **characterized in that** the damping cap (7) comprises holders (21) in addition to the receiver (17, 18; 24) to which the central console (28) may be fastened by means of screw connections.

9. Fastening device according to one of the preceding claims, **characterized in that** fastening devices (21a) for fastening electrical cables and/or air guidance elements arranged inside the central console (28) are additionally provided on the damping cap (7).

10. Fastening device according to one of the preceding claims, **characterized in that** the damping cap (7) comprises an at least partially peripheral fastening flange (13, 14) on which the receiver (17, 18; 24) and/or downwardly protruding centering pins (16) are arranged, and which protrude into corresponding recesses (15) of the center tunnel (2).

## Revendications

1. Dispositif de fixation sur le dessous de caisse (1) d'un véhicule automobile, au moyen duquel un dispositif de changement de vitesses (3) peut être fixé sur le dessous de caisse (1), le dispositif de changement de vitesses (3) présentant un levier de vitesse (4) pénétrant dans l'habitacle du véhicule et étant recouvert par une console centrale (28), laquelle peut être connectée fixement au dessous de caisse (1) par le biais d'au moins un élément de retenue (19, 20), **caractérisé en ce qu'**une coiffe d'amortissement (7) recouvrant le dispositif de changement de vitesses (3), présentant un passage pour le levier de vitesse (4), est prévue, et **en ce que** l'élément de retenue (19, 20) peut être fixé au dessous de caisse (1) en interposant la coiffe d'amortissement (7).

2. Dispositif de fixation selon la revendication 1, **caractérisé en ce que** la coiffe d'amortissement (7) présente au moins un logement (17, 18 ; 24) pour l'élément de retenue (19, 20) de la console centrale (28).

3. Dispositif de fixation selon la revendication 1 ou 2, **caractérisé en ce qu'**un boîtier de changement de vitesses (3a) du dispositif de changement de vitesses (3) est vissé au côté inférieur du dessous de caisse (1), en particulier le boîtier de changement de vitesses (3a), conjointement avec la coiffe d'amortissement (7) disposée sur le côté supérieur du dessous de caisse (1), étant fixé en des points de fixation identiques.

4. Dispositif de fixation selon la revendication 1, 2 ou 3, **caractérisé en ce que** le logement (17, 18 ; 24) pour l'élément de retenue (19, 20) est réalisé en tant que connexion enfichable avec en outre une connexion par enclipsage (19d, 20d) et/ou une connexion par vissage (en 24b).

5. Dispositif de fixation selon l'une quelconque des revendications 2, 3 ou 4, **caractérisé en ce que** le logement (17, 18 ; 24) pour l'élément de retenue (19, 20) est prévu au niveau des côtés frontaux (10, 11) situés dans la direction longitudinale du véhicule et/ou au niveau de brides de fixation (13, 14), adjacentes à ceux-ci, de la coiffe d'amortissement (7).

6. Dispositif de fixation selon l'une quelconque des revendications 4 ou 5, **caractérisé en ce que** la connexion enfichable est réalisée sous forme de guidage télescopique avec un logement tubulaire (17, 18) et une partie coulissante (19c, 20c) coopérant avec celui-ci.

7. Dispositif de fixation selon l'une quelconque des revendications 4 ou 5, **caractérisé en ce que** la connexion enfichable est réalisée avec un logement en forme de T (24) et une partie coulissante (20c) venant en prise par le dessus en forme de U avec les portions de paroi (24a, 24b) de celui-ci.

8. Dispositif de fixation selon l'une quelconque des revendications 2 à 7, **caractérisé en ce que** la coiffe d'amortissement (7) présente, en plus du logement (17, 18 ; 24), des fixations (21) au niveau desquelles la console centrale (28) peut être fixée au moyen de connexions par vissage.

9. Dispositif de fixation selon l'une quelconque des revendications précédentes, **caractérisé en ce que** des dispositifs de fixation (21a) pour la fixation de conduites électriques posées à l'intérieur de la console centrale (28) et/ou d'éléments de guidage d'air sont en outre prévus sur la coiffe d'amortissement (7).

10. Dispositif de fixation selon l'une quelconque des revendications précédentes, **caractérisé en ce que** la coiffe d'amortissement (7) présente une bride de fixation (13, 14) au moins en partie périphérique, sur laquelle sont disposés le logement (17, 18 ; 24) et/ou des goupilles de centrage (16) faisant saillie vers le bas, lesquelles pénètrent dans des évidements correspondants (15) du tunnel central (2).
